# EUROPÄISCHE PATENTSCHRIFT

(11) **EP 1 261 511 B1**
(45) Veröffentlichungstag und Bekanntmachung des Hinweises auf die Patenterteilung: **29.06.2005**
(21) Anmeldenummer: 01997422.9
(22) Anmeldetag: 10.11.2001
(51) Int. Cl.: B60S 1/04

(54) **SCHEIBENWISCHANLAGE UND VERFAHREN ZUR HERSTELLUNG EINER SOLCHEN, INSBESONDERE FÜR EIN KRAFTFAHRZEUG**
WINDOW WIPER SYSTEM AND METHOD FOR THE PRODUCTION THEREOF, ESPECIALLY FOR A MOTOR VEHICLE
SYSTEME D'ESSUIE-GLACE ET SON PROCEDE DE REALISATION, NOTAMMENT POUR UNE AUTOMOBILE

(30) Priorität: 25.11.2000 DE 10058644
(43) Veröffentlichungstag der Anmeldung: 04.12.2002
(73) Patentinhaber: ROBERT BOSCH GMBH, 70442 Stuttgart (DE)
(72) Erfinder: MUEHLPFORTE, Kurt, 77815 Buehl (DE); DIETRICH, Jan, 77815 Buehl (DE); LORENZ, Hubert, 76547 Sinzheim-Kartung (DE); BOOS, Tino, 76532 Baden-Baden (DE)
(86) Internationale Anmeldenummer: PCT/DE2001/004224
(87) Internationale Veröffentlichungsnummer: WO 2002/042128

(56) Entgegenhaltungen:
- EP-A- 0 703 128
- DE-A- 19 904 155
- FR-A- 2 724 892
- US-A- 5 372 449

## Beschreibung

### Stand der Technik

Die Erfindung betrifft eine Scheibenwischanlage sowie ein Verfahren zur Herstellung einer Scheibenwischanlage nach Gattung der unabhängigen Ansprüche. Es sind schon einige derartige Scheibenwischvorrichtungen bekannt, bei denen ein Wischerlager mit einem Ansatz versehen ist, der Aussparungen aufweist und in eine Rohrplatine, welche als Hohlprofil ausgebildet ist, eingeschoben wird. Üblicherweise wird nach dem Einführen des Ansatzes in das Hohlprofil im Bereich der Aussparungen Druck ausgeübt, wodurch das Wischerlager an der Rohrplatine festgecrimpt wird. Dies ist beispielsweise in der DE 41 41 385 A1 gezeigt.

FR-A-2 724 892 offenbart den Oberbegriff des Anspruchs 1.

### Vorteile der Erfindung

Die erfindungsgemäße Scheibenwischanlage mit den Merkmalen des Hauptanspruchs hat den Vorteil, dass Gußmaterial durch ein im Hohlprofil angeordnetes Loch in die Aussparung des Ansatzes des Wischerlagers eingespritzt wird. Dies führt zu besonderer Festigkeit und besonders langer Haltbarkeit der Verbindung. Dadurch wird die Schüttelfestigkeit gerade auch bei nachlassender Materialfestigkeit dennoch gewährleistet.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn die Aussparung größer ist als die Lochweite, weil dadurch erzielt wird, dass das Gußmaterial nach dem Einspritzen nicht durch das Loch aus der Aussparung herausfallen kann.

Weiterhin ist es vorteilhaft, wenn der Ansatz bis auf eine, zumindest teilweise umlaufende, in eingeschobener Position im Bereich des Lochs liegende Ringnut, zylinderförmig ausgebildet ist. So ist gewährleistet, dass der Ansatz leicht in das in diesem Falle als Rohr ausgebildete Hohlprofil eingeführt werden kann. Dadurch ergibt sich nach dem Gießen innerhalb des Hohlprofils eine an den Innenwänden des Hohlprofils dicht anliegende Passung.

Durchgreift eine Aussparung den Ansatz, quer zu seiner Längserstreckung, in voller Länge, so ergibt sich nach dem Guß ein Querbolzen, der für einen größtmöglichen Halt des Wischerlagers in der Rohrplatine sorgt.

Besonders vorteilhaft ist dabei, wenn der Ansatz zwei quer zu seiner Längserstreckung gegenüberliegend angeordnete, wannenartige Aussparungen aufweist, die durch mindestens eine Öffnung verbunden sind.

Ist das Hohlprofil als Rohr ausgebildet und erstreckt sich das Gußmaterial außerhalb des Hohlprofils Kreisringsektorartig oder ringförmig, so ergibt sich durch die sich beim Erkalten des Gußmaterials einstellende Schrumpfung ein Effekt des Zusammenspannens der einzelnen Kreisringsektoren. Dies ist besonders vorteilhaft, wenn das Hohlprofil entlang seines Umfangs mehrere im Wesentlichen gleichmäßig verteilte Löcher aufweist.

Eine analoge Ausbildung ist natürlich auch mit rechteckigen oder quadratischen oder beliebig anderen Profilen möglich.

Besteht das Gußmaterial aus einer Zinklegierung, so ergibt sich eine korrosionsbeständige Verbindung aus einem für Druckguß geeigneten Material. Natürlich kann auch jedes andere flüssige und aushärtbare Material verwendet werden, also neben Metallen und Metalllegierungen auch Kunststoffe wie Epoxidharz. Durch geeignete Formung der Aussparungen können auch Gußmaterialien mit einer hohen Schrumpfung verwendet werden.

Vorteilhaft ist es weiterhin, wenn das Gußmaterial außerhalb des Trägerrohrs zu einer Befestigungskonsole geformt ist, insbesondere dann wenn die Befestigungskonsole Befestigungsmittel, wie Befestigungslöcher oder Nasen aufweist, die zur Aufnahme von Schrauben, Nieten, Klemmen oder ähnlichen dienen.

Das erfindungsgemäße Verfahren mit den Merkmalen des Anspruchs 10 hat den Vorteil, dass ein einfaches und kostengünstiges Verfahren zur Verfügung steht, mit welchem eine äußerst stabile und beständige Ankopplung eines Wischerlagers an eine Rohrplatine erreicht wird.

Wird das Gußmaterial darüber hinaus mindestens zu einem Kreisringsektor, beispielsweise zu einem ganzen Kreisring geformt, so wird der Halt des Wischerlagers an der Rohrplatine weiter verstärkt, da sich durch die Schrumpfung des Gußmaterials ein zusätzlicher Klemmeffekt ergibt.

Wenn als Gußmaterial eine Zinklegierung verwendet wird, so können vorteilhafterweise übliche Druckgussverfahren verwendet werden.

Weiters ist es von Vorteil, die Formung des Gußmaterials außerhalb des Trägerrohrs so vorzunehmen, daß sich eine Befestigungskonsole zur Befestigung der Scheibenwischanlage ergibt. Dabei können auch Befestigungslöcher zur Aufnahmen von Schrauben, Nieten, Klemmen oder ähnlichem berücksichtigt werden.

### Zeichnung

Ein Ausführungsbeispiel der Erfindung ist in den Zeichnungen dargestellt und in der nachfolgenden Beschreibung näher erläutert. Es zeigen:
Figur 1 eine übliche Scheibenwischanlage,
Figur 2 Träger und Wischerlager einer Scheibenwischanlage in perspektivischer Darstellung,
Figur 3 Träger und Wischerlager einer erfindungsgemäßen Scheibenwischanlage in Seitenansicht,
Figur 4 Träger, Wischerlager in montiertem Zustand in einer Seitenansicht
Figur 5 einen Querschnitt durch den Träger aus Figur 4 und
Figuren 6a und 6b den abgeformten Bereich des Gußmaterials mit Befestigungskonsolen in einer Seitenansicht.

### Beschreibung des Ausführungsbeispiels

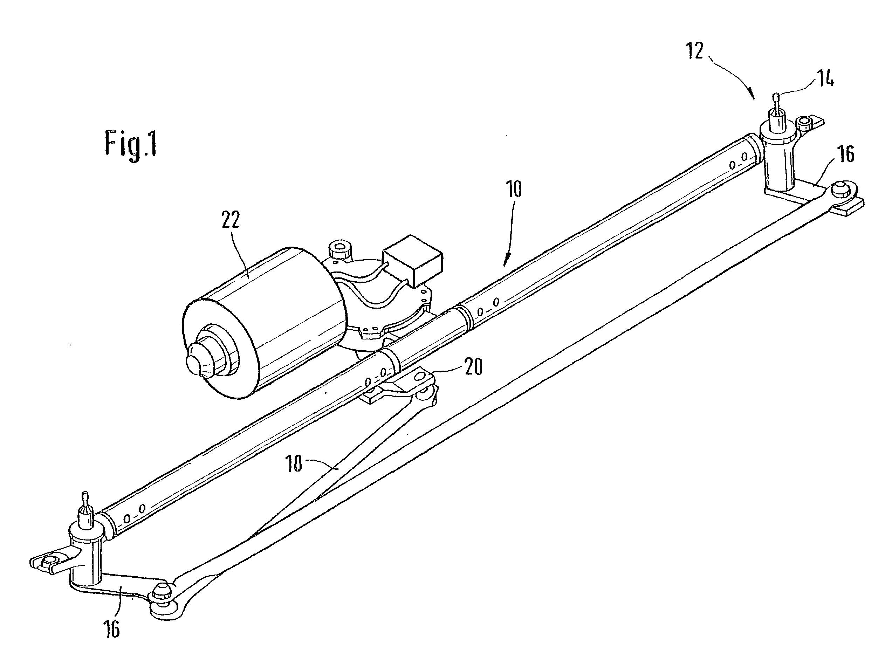

Figur 1 zeigt eine schematische Darstellung einer üblichen Scheibenwischanlage. Diese weist einen als Hohlprofil ausgebildeten Träger 10 auf, der typischer Weise als Rohr gestaltet ist. Er weist zwei Enden auf, an denen jeweils ein Wischerlager 12 befestigt ist. In diesem Wischerlager 12 ist jeweils eine Wischerwelle 14 gelagert, an der ein hier nicht dargestellter Wischerarm mit einem Wischblatt befestigt werden kann. Angetrieben wird die Wischerwelle 14 durch den Schwenkhebel 16, der über eine Schubstange 18 und eine Kurbel 20 von einem Wischermotor 22 in eine Pendelbewegung versetzt wird.

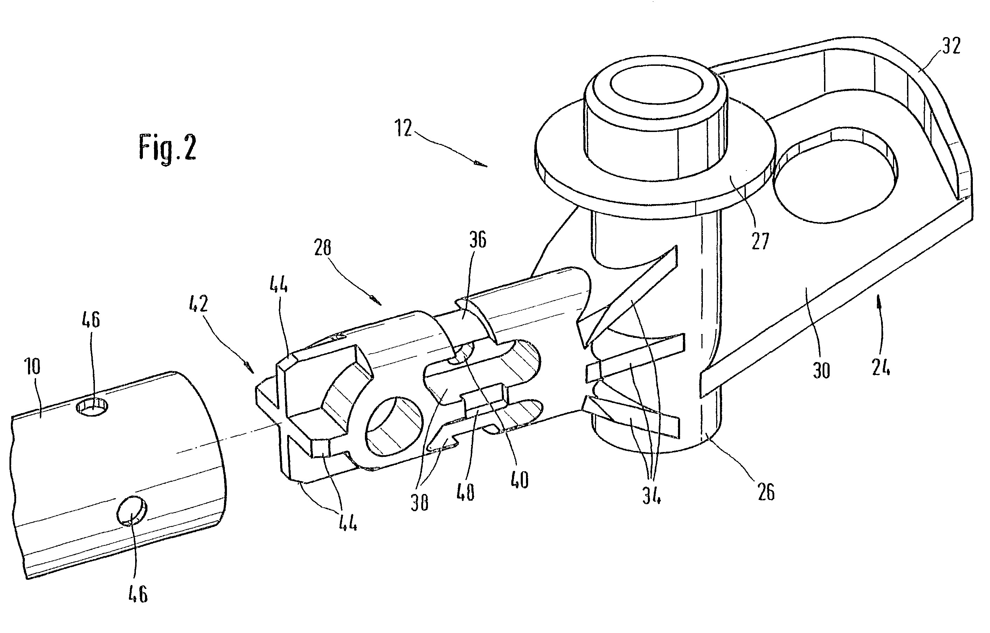

In Figur 2 ist das Wischerlager 12 und das Ende eines Trägers 10 im Detail dargestellt.

Das Wischerlager 12 weist im wesentlichen drei Bereiche auf, einen Befestigungsbereich 24, einen Lagerstutzen 26 und einen Ansatz 28 und ist beispielsweise aus Kunststoff gegossen. Der Lagerstutzen 26 besteht im wesentlichen aus einem kurzen Rohrstück zylindrischer Gestalt, welches die nicht dargestellte Wischerwelle lagert. Im oberen Abschnitt des kurzen Rohrstücks des Lagerstutzens 26 ist um das Rohrstück eine Ringscheibe 27 kranzartig, einstückig an den Lagerstutzen 26 angeformt.

Etwa senkrecht zur Mittelachse des zylindrischen Lagerstutzens 26 ist der im wesentlichen zylindrische Ansatz 28 an den Lagerstutzen 26 angeformt. Auf der dem Ansatz 28 gegenüberliegenden Seite des Lagerstutzens 26 ist der Befestigungsbereich 24 als im wesentlichen flache Platte 30 angeordnet. Seitlich weist die Platte 30 teilweise einen Kragen 32 auf.

Der Ansatz 28 ist zur Verstärkung mittels dreier Gußbrücken 34 an den Lagerstutzen 26 angeformt. Etwa mittig zu seiner Längserstreckung weist der Ansatz eine Ringnut 36 auf, welche umlaufend um den gesamten Ansatz 28 verläuft. Überschneidend zu dieser Ringnut 36 weist der Ansatz 28 insgesamt vier jeweils gegenüberliegende wannenartige Aussparungen 38 auf, welche teilweise in ihrem Bodenbereich miteinander verbunden sind. Hier sind insbesondere die beiden gegenüberliegenden wannenartigen Aussparungen 38 durch eine als Bohrung ausgebildete Öffnung 40 in ihrem Bodenbereich miteinander verbunden.

An dem dem Lagerstutzen 26 abgewandten Ende des Ansatzes 28 verjüngt sich dieser zu einer Kreuzstruktur 42, die konzentrisch zur Mittelachse des Ansatzes 28 verläuft. An den vier Außenkanten der Kreuzstruktur 42 weist diese eine Fase 44 auf, die dem leichteren Einführen in den Träger 10 dient.

Der Träger 10 besteht aus einem Rohr, dessen Wand vier Löcher 46 aufweist, die gleichmäßig um seinen Umfang verteilt sind. Der Innendurchmesser des Rohrs 10 ist zumindest im Bereich der Enden etwa gleich groß wie der Außendurchmesser des Ansatzes 28 des Wischerlagers 12.

Wird der Ansatz 28 des Wischerlagers 12 in das Trägerrohr 10 eingeschoben, so befinden sich in der Endstellung die Löcher 46 genau im Bereich der Ringnut 36, wo auch die wannenartigen Aussparungen 38 angeordnet sind.

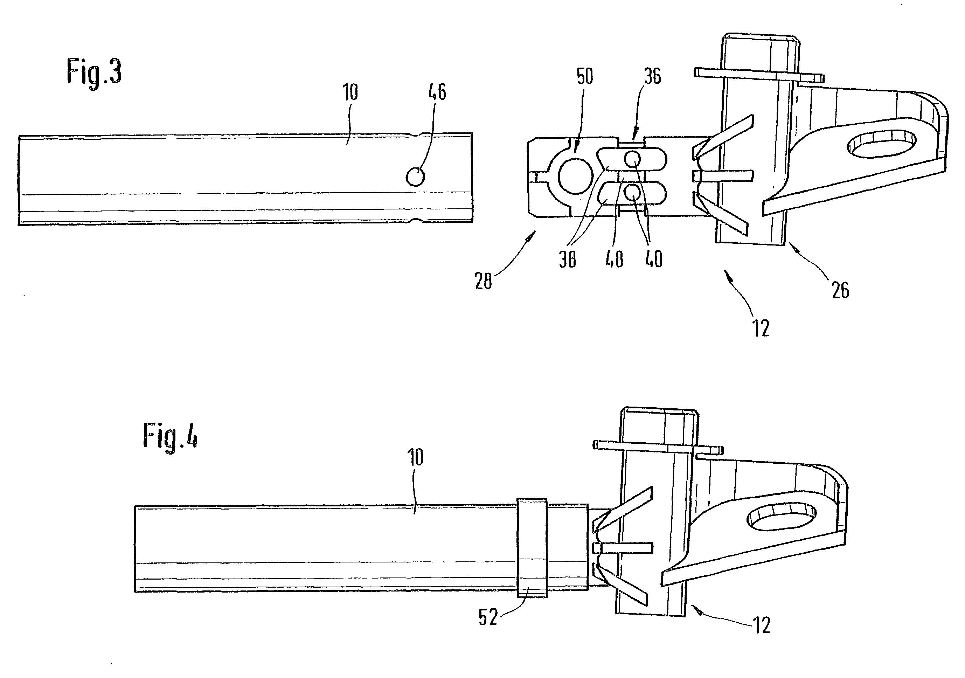

In Figur 3 ist wieder das Wischerlager 12 und der Träger 10 dargestellt, jedoch in einer Seitenansicht. Die wannenartigen Aussparungen 38 im Ansatz 28 liegen in dieser Ansicht nebeneinander, so dass sich durch die Ringnut 36 ein Verbindungsgraben 48 ergibt, der die beiden Aussparungen 38 miteinander verbindet. Der Träger 10 weist die Löcher 46 derart auf, dass zumindest zwei, also genau die, die in dieser Seitenansicht abgebildet sind, sich genau über dem Verbindungsgraben 48 befinden. Selbstverständlich kann der Ansatz 28 auch noch Stabilisierungselemente 50 aufweisen. Dies ist hier als Durchbruch 50 so durch den Ansatz 28 eingezeichnet und ist in der Spritztechnik allgemein bekannt.

In Figur 4 ist das Wischerlager 12 an den Träger 10 anmontiert, in einer Seitenlage gezeichnet.

Zur Montage wurde durch die Bohrungen 46 Gußmaterial gespritzt, welches aus Zink oder einer Zinklegierung besteht. Dieses Gußmaterial füllt innerhalb des Trägerrohrs 10 die Ringnut 36 sowie die wannenartigen Aussparungen 38 aus und ist außerhalb des Trägerrohrs 10 fortgesetzt und als Ring 52 geformt.

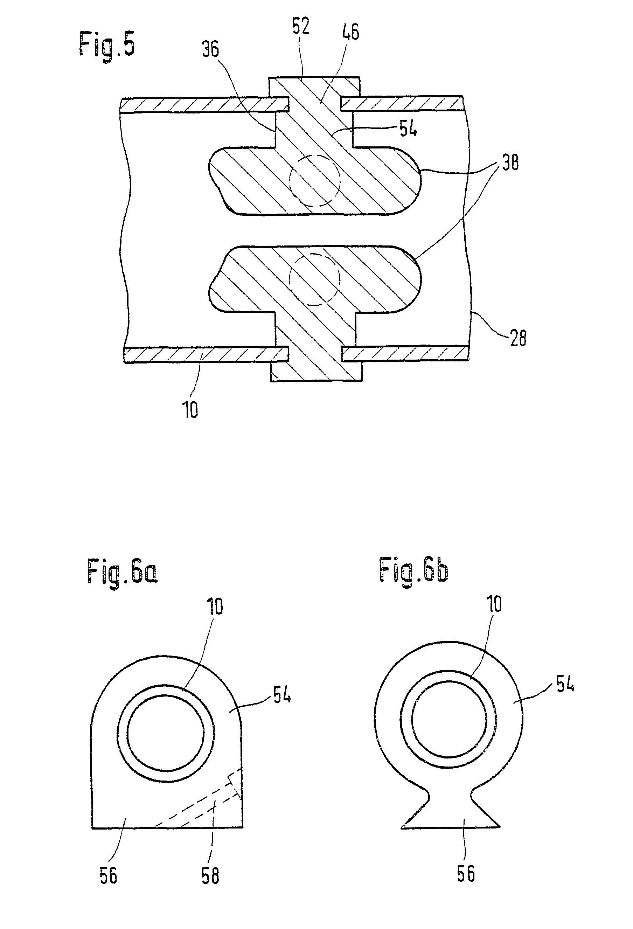

In Figur 5 ist ein Längsschnitt durch den Bereich der Aussparungen 38 des Ansatzes 28 gezeigt. Die Schnittfläche ist hier durch die Mittelachse des Lagerstutzens 26 und die Mittelachse des Rohrs 10 gegeben. Das Gußmaterial 54 wurde durch die Löcher 46 eingespritzt, und zwar derart, dass sich die Aussparungen 38 und die umlaufende Ringnut 36 mit Gußmaterial füllen. Außerhalb des Trägers 10 ist das Gußmaterial als Ring 52 geformt, der den gesamten Träger umläuft.

Natürlich ist diese Art der Befestigung nicht nur bei zylinderrohrartigen Trägern 10 möglich, sondern beispielsweise auch bei quadratischen, rechteckigen oder beliebig anderen Hohlprofilen. Zur Vereinfachung der Positionierung der Löcher 46 über der Ringnut 36 kann beispielsweise am Umfang des Trägers 10 auf Höhe der Löcher 46 eine kleine Delle eingepresst werden. Zwar muß dann zum Einschieben des Ansatzes 20 in den Träger 10 eine erhöhte Kraft aufgewendet werden, jedoch kann die richtige Position der Löcher 46 über der Ringnut 36 an einem plötzlichen Nachlassen der Kraft erkannt werden, was einen Selbstpositionierungseffekt zur Folge hat.

Beim erfindungsgemäßen Verfahren weist das Wischerlager 12 einen Ansatz 28 auf, der wiederum eine Aussparung 36 aufweist, die beispielsweise als Ringnut ausgebildet ist. Der Träger 10, der als Hohlprofil ausgebildet ist, weist dazu umlaufende Löcher 46 auf, die sich, wenn der Ansatz 28 in den Träger 10 eingeschoben ist, genau über der Aussparung 36 befinden. Das Hohlprofil 10 wird mit dem Ende, in das der Ansatz 28 eingeschoben ist, in eine Gießform eingebracht, die derart ausgebildet ist, dass sich um das Hohlprofil 10 herum eine Abformung ergibt. Wird nun Gußmaterial in die Gußform eingespritzt, so fließt dieses durch die Löcher 46 in die Aussparung 36 und füllt diese vollständig aus. Typischer Weise sind diese Aussparungen 38 größer als die Löcher 46, so dass sich Hinterschnitte ergeben und ein Herausfallen des eingespritzten Gußmaterials verhindert wird. Außerhalb des Trägers 10 wird das Material durch das Gußwerkzeug umlaufend abgeformt. Auf diese Weise ergibt sich nach dem Abkühlen durch die Schrumpfung des Gußmaterials eine extrem feste und spielfreie Verbindung zwischen dem Wischerlager 12 und dem Träger 10.

Das Gußmaterial muß außerhalb des Trägers 10 jedoch nicht unbedingt als Kreisring abgeformt sein. Hier sind auch beliebig andere Formen denkbar, insbesondere auch dann, wenn der Träger 10 nicht zylindrisch ausgebildet ist.

Als Gußmaterial 54 eignet sich Zink oder eine Zinklegierung aufgrund seiner Fließeigenschaften am besten.

Insbesondere ist es möglich das Gußmaterial so zu formen, daß sich eine Befestigungskonsole zur Befestigung der Scheibenwischanlage an der Karosserie ergibt. Dies ist in den Figuren 6a und 6b gezeigt. In diese Abformung können dann auch bereits Befestigungslöcher 58 für Befestigungsmittel wie beispielsweise Schrauben oder Nieten berücksichtigt werden. Typischerweise wird dann die Abformung in Form eines Anschlußteils 56 vorgenommen werden, welches beispielsweise auch eine schienenartige Struktur aufweisen kann.

## Patentansprüche

1. Scheibenwischanlage, insbesondere für ein Kraftfahrzeug, mit einem, zumindest teilweise als Hohlprofil (10) ausgebildeten Träger und mit mindestens einem Wischerlager (12), das mit mindestens einem Ansatz (28) versehen ist, der wenigstens eine Aussparung (38) aufweist und zumindest teilweise in das Hohlprofil (10) eingeschoben ist, wobei das Hohlprofil (10) zumindest ein, im Bereich der Aussparung (38) liegendes Loch (46) aufweist und, **dadurch gekennzeichnet, dass** in die Aussparung (38) durch das Loch (46) Gußmaterial gespritzt ist, das sich bis außerhalb des Hohlprofils (10) erstreckt.

2. Scheibenwischanlage nach Anspruch 1, **dadurch gekennzeichnet, dass** die Aussparung größer als die Lochweite ist.

3. Scheibenwischanlage nach Anspruch 1 oder 2, **dadurch gekennzeichnet, dass** der Ansatz (28) bis auf eine, zumindest teilweise umlaufende in eingeschobener Position im Bereich des Lochs (46) liegende Ringnut (36), zylinderförmig ausgebildet ist.

4. Scheibenwischanlage nach einem der vorhergehenden Ansprüche, **dadurch gekennzeichnet, dass** mindestens eine Aussparung (38) den Ansatz (28) quer zu seiner Längserstreckung, in voller Länge durchgreift.

5. Scheibenwischanlage nach einem der vorhergehenden Ansprüche, **dadurch gekennzeichnet, dass** der Ansatz (28) mindestens zwei, quer zu seiner Längserstreckung gegenüberliegend angeordnete, wannenartige Aussparungen (38) aufweist, die durch mindestens eine Öffnung (40) verbunden sind.

6. Scheibenwischanlage nach einem der vorhergehenden Ansprüche, **dadurch gekennzeichnet, dass** das Hohlprofil (10) als Rohr ausgebildet ist und sich das Gußmaterial außerhalb des Hohlprofils (10) zumindest im wesentlichen ringförmig erstreckt.

7. Scheibenwischanlage nach einem der vorhergehenden Ansprüche, **dadurch gekennzeichnet, dass** das Hohlprofil (10) entlang seines Umfangs mehrere, im wesentlichen gleichmäßig verteilte Löcher(46) aufweist.

8. Scheibenwischanlage nach einem der vorhergehenden Ansprüche, **dadurch gekennzeichnet, dass** das Gußmaterial aus Zink oder einer Zinklegierung besteht.

9. Scheibenwischanlage nach einem der vorhergehenden Ansprüche, **dadurch gekennzeichnet, dass** das Gußmaterial so geformt ist, daß sich eine Befestigungskonsole zur Befestigung der Scheibenwischanlage ergibt.

10. Verfahren zur Herstellung einer Scheibenwischanlage, insbesondere einer Scheibenwischanlage nach Anspruch 1, wobei ein Wischerlager (12) mit mindestens einem, mindestens eine Aussparung (38) aufweisenden Ansatz (28) in einen, zumindest teilweise als Hohlprofil ausgebildeten Träger (10) eingeschoben wird und das Hohlprofil (10) im Bereich der mindestens einen Aussparung (38), mindestens ein Loch (46) aufweist, **dadurch gekennzeichnet, dass** durch das Loch (46) ein Gußmaterial gespritzt wird, welches sich bis außerhalb des Hohlprofils (10) erstreckt und aushärtet.

11. Verfahren nach Anspruch 10, **dadurch gekennzeichnet, dass** das Gußmaterial mindestens zu einem Ringsektor geformt wird.

12. Verfahren nach einem der Ansprüche 10 bis 11, **dadurch gekennzeichnet, dass** als Gußmaterial Zink oder eine Zinklegierung verwendet wird.

13. Verfahren nach einem der Ansprüche 10 bis 12, **dadurch gekennzeichnet, dass** das Gußmaterial so geformt wird, daß sich eine Befestigungskonsole zur Befestigung der Scheibenwischanlage ergibt.

## Claims

1. Window wiper system, especially for a motor vehicle, having a support, which is designed at least partially as a hollow profile (10), and having at least one wiper bearing (12), which is provided with at least one attachment (28) which has at least one cutout (38) and is at least partially pushed into the hollow profile (10), the hollow profile (10) having at least one hole (46) situated in the region of the cutout (38), and **characterized in that** casting material is injected through the whole (46) into the cutout (38) and extends to outside the hollow profile (10).

2. Window wiper system according to Claim 1, **characterized in that** the cutout is larger than the width of the hole.

3. Window wiper system according to Claim 1 or 2, **characterized in that** the attachment (28) is of cylindrical design up to an annular groove (36), which at least partially encircles it and is situated, in the pushed-in position, in the region of the hole (46).

4. Window wiper system according to one of the preceding claims, **characterized in that** at least one cutout (38) reaches over its full length through the attachment (28) transversely to its longitudinal extent.

5. Window wiper system according to one of the preceding claims, **characterized in that** the attachment (28) has at least two trough-like cutouts (38) which are arranged lying opposite transversely to its longitudinal extent and are connected by at least one opening (40).

6. Window wiper system according to one of the preceding claims, **characterized in that** the hollow profile (10) is designed as a tube and casting material extends at least substantially annularly outside the hollow profile (10).

7. Window wiper system according to one of the preceding claims, **characterized in that** the hollow profile (10) has a plurality of essentially uniformly distributed holes (46) along its circumference.

8. Window wiper system according to one of the preceding claims, **characterized in that** the casting material consists of zinc or a zinc alloy.

9. Window wiper system according to one of the preceding claims, **characterized in that** the casting material is shaped in such a manner that a fastening console is produced for fastening the window wiper system.

10. Method for the production of a window wiper system, especially a window wiper system according to Claim 1, a wiper bearing (12) having at least one attachment (28), which has at least one cutout (38), being pushed into a support (10), which is at least partially designed as a hollow profile, and the hollow profile (10) having at least one hole (46) in the region of the at least one cutout (38), **characterized in that** a casting material is injected through the hole (46) and extends to outside the hollow profile (10) and hardens.

11. Method according to Claim 10, **characterized in that** the casting material is shaped at least to form a sector of a ring.

12. Method according to either of Claims 10 and 11, **characterized in that** zinc or a zinc alloy is used as the casting material.

13. Method according to one of Claims 10 to 12, **characterized in that** the casting material is shaped in such a manner that a fastening console is produced for fastening the window wiper system.

## Revendications

1. Installation d'essuie-glace, en particulier pour un véhicule automobile, comprenant une poutre formée au moins partiellement d'un profilé creux (10) et au moins un palier d'essuie-glace (12), muni d'au moins une saillie (28) ayant au moins un évidement (38) et qui est emmanchée au moins partiellement dans le profilé creux (10), le profilé creux (10) présentant au moins un trou (46) situé dans la région de l'évidement (38),
**caractérisée en ce que**
de la matière de coulée est injectée dans l'évidement (38) à travers le trou (46) et s'étend jusqu'à l'extérieur du profilé creux (10).

2. Installation d'essuie-glace selon la revendication 1,
**caractérisée en ce que**
l'évidement est plus grand que la largeur du trou.

3. Installation d'essuie-glace selon la revendication 1 ou 2,
**caractérisée en ce que**
la saillie (28) est de configuration cylindrique à l'exception d'une gorge annulaire (36) s'étendant au moins partiellement sur la périphérie et qui se trouve dans la région du trou (46) dans la position emmanchée.

4. Installation d'essuie-glace selon une des revendications précédentes,
**caractérisée en ce que**
au moins un évidement (38) traverse la saillie (28) sur toute sa longueur, transversalement à son extension longitudinale.

5. Installation d'essuie-glace selon une des revendications précédentes,
**caractérisée en ce que**
la saillie (28) présente au moins deux évidements (38) en forme de baignoire, disposés l'un à l'opposé de l'autre dans la direction transversale à l'extension longitudinale de la saillie et qui sont reliés par au moins une ouverture (40).

6. Installation d'essuie-glace selon une des revendications précédentes,
**caractérisée en ce que**
le profilé creux (10) est constitué par un tube et la matière de coulée s'étend en dehors du profilé creux (10), au moins avec une forme sensiblement annulaire.

7. Installation d'essuie-glace selon une des revendications précédentes,
**caractérisée en ce que**
le profilé creux (10) présente le long de sa périphérie des trous (46) répartis sensiblement uniformément.

8. Installation d'essuie-glace selon une des revendications précédentes,
**caractérisée en ce que**
la matière de coulée est composée de zinc ou d'un alliage de zinc.

9. Installation d'essuie-glace selon une des revendications précédentes,
**caractérisée en ce que**
la matière de coulée est conformée de manière à donner naissance à une console de fixation destinée à la fixation de l'installation d'essuie-glace.

10. Procédé de fabrication d'une installation d'essuie-glace, en particulier d'une installation d'essuie-glace selon la revendication 1, dans laquelle un palier d'essuie-glace (12) présentant une saillie (28) ayant au moins un évidement (38) et emmanchée dans une poutre (10) constituée au moins partiellement par un profilé creux, et le profilé creux (10) présente au moins un trou (6) dans la région de l'au moins un évidement (38),
**caractérisée en ce qu'**
à travers le trou (46) est injectée une matière de coulée qui s'étend jusque en dehors du profilé creux (10) et durcit.

11. Procédé selon la revendication 10,
**caractérisé en ce que**
la matière de coulée est moulée en au moins un secteur d'anneau.

12. Procédé selon une des revendications 10 à 11,
**caractérisée en ce qu'**
on utilise comme matière de coulée du zinc ou un alliage de zinc.

13. Procédé selon une des revendications 10 à 12,
**caractérisée en ce que**
la matière de coulée est moulée de manière qu'il se forme une console de fixation destinée à la fixation de l'installation d'essuie-glace.
